# EUROPEAN PATENT SPECIFICATION

(11) **EP 3 078 555 B1**
(45) Date of publication and mention of the grant of the patent: **25.09.2019**
(21) Application number: 16162509.0
(22) Date of filing: 28.03.2016
(51) Int. Cl.: B60S 1/40

(54) **CONNECTION OF WINDSHIELD WIPER BLADE FOR MULTIPLE TYPES OF ARMS**
VERBINDUNG EINES SCHEIBENWISCHERBLATTS FÜR MEHRERE ARTEN VON ARMEN
CONNEXION DE BALAI D'ESSUIE-GLACE POUR DE MULTIPLES TYPES DE BRAS

(30) Priority: 06.04.2015 BR 102015007588
(43) Date of publication of application: 12.10.2016
(73) Proprietor: Dyna Industria e Comercio Ltda., 07042-010 Guarulhos / Sao Paulo (BR)
(72) Inventor: NACAMULI, Marc, Guarulhos, São Paulo (SP) (BR)
(74) Representative: Patentanwälte Dr. Keller, Schwertfeger Partnerschaft mbB

(56) References cited:
- EP-A2- 2 426 017
- US-A1- 2011 277 265
- US-A1- 2012 060 316
- US-A1- 2014 182 075

## Description

The present patent of invention relates to a connecting arrangement disposed in a windshield wiper blade to be applied to four different arms of windshield wipers.

The blades for the windshield wiper have a natural wear after a certain time of use, requiring replacement. In aftermarket it is necessary that the blade has a proper and safe connection to the arm of the windshield wiper, which is rarely replaced in a vehicle.

In this respect the replacement blade must be adaptable to a windshield wiper arm and, preferably, also be adaptable to arms of different suppliers, in order to avoid the need to maintain an extensive line of blades with different connectors.

This streamlining reduces the cost of manufacturing, the cost of stock for the blade manufacturer and blade dealer.

They are known multiple connection ways.

The document P10901324-5 of the applicant shows a blade with connection for more than one arm.

The document MU 7701706-4 of the applicant shows a connection between the arm and blade.

The documents US 20140317875 US20140317874 show blade connections that are applicable for different arms of the windshield wipers.

The document US 2014 182 075 A1 shows a wiper coupler adaptor for releasably attaching a wiper assembly to a wiper arm.

The object of this patent is to provide a connecting arrangement of a blade which can be coupled to four different arms of windshield wipers easily, firm and safely.

The object is solved by a connecting arrangement according to claim 1.

The connection includes a connection device which is assembled on a central support rigidly mounted on the blade body; it is provided for a movement of a few degrees between the connection device and the central support, to allow accommodation of the rubber blade appropriately for a windshield of a vehicle.

The connection device also includes a cover that can be used in some arms as an additional locking element or, for other type of arms, act only as an aesthetic element.

The connection device typically locks the arm of the windshield wiper through flexible teeth arranged in the device, which can operate above or below, in provided recesses in the arms to which the blade is attached.

For better understanding, the figures illustrate the preferred construction:

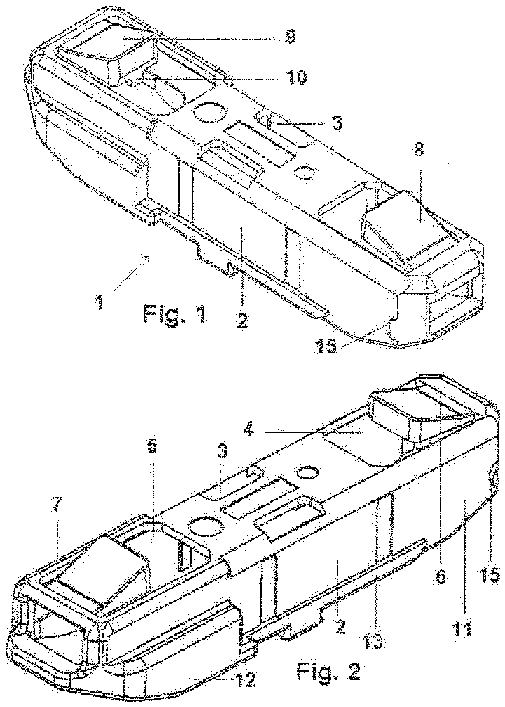

Fig. 1 shows a view in perspective of the connecting device.
Fig. 2 shows the opposite perspective view of figure 1 of the connecting device.

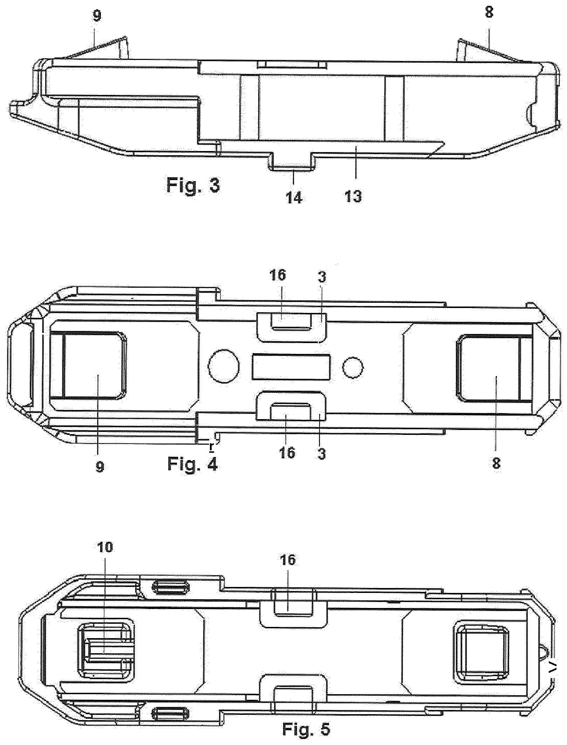

Fig. 3 shows a side view of the connecting device.
Fig. 4 shows a top view of the connecting device.
Fig. 5 shows a bottom view of the connecting device.

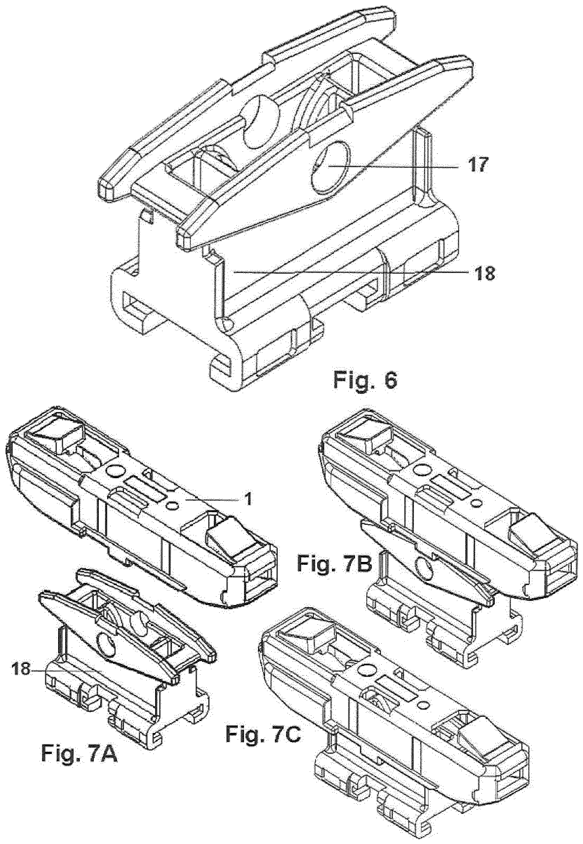

Fig. 6 shows a view in perspective of the connector bracket.
Fig. 7A shows a perspective view of the connector before being applied to the support.
Fig. 7B shows a view in perspective of the connector being applied to the support.
Fig. 7C shows a perspective view of the connector applied to the support.

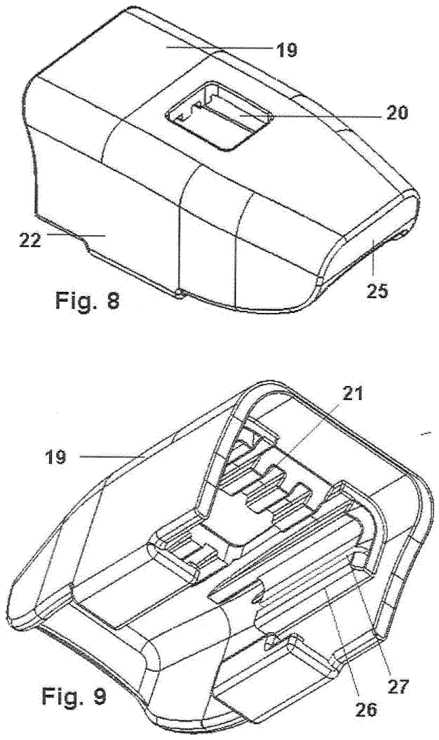

Fig. 8 shows a top perspective view of the connector cover.
Fig. 9 shows a bottom perspective view of the connector cover.

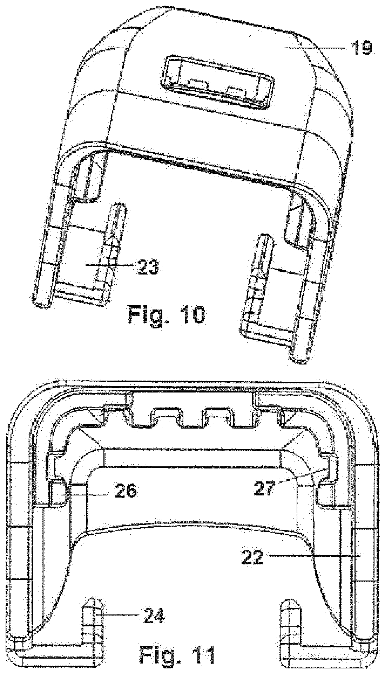

Fig. 10 shows a rear perspective view of the connector cover.
Fig. 11 shows a rear view of the connector cover.
Fig. 12 shows a view in perspective of the connecting device before receiving the cover.
Fig. 13 shows a view in perspective of the connection device applied to the cover.
Fig. 14 shows a view in perspective of the connecting device with a cutaway view of the cover applied to it.
Fig. 15 shows a front cutaway view of the cover applied to the connection device.
Fig. 16 shows a view in perspective of the connecting device before receiving the cover from the opposite side to that of figure 12.
Fig. 17 shows a view in perspective of the connecting device with the applied cover from the opposite side of that of figure 13.
Fig. 18 shows a view in perspective of the connecting device with the cutaway view of the cover applied thereto in the opposite side to that of figure 14.
Fig. 19 shows a front cutaway view of the cover applied to the connecting device on the opposite side to that of figure 15.
Figs. 20A, 20B, 20C and 20D show the extremes of the various attachable arms to the connecting device.
Fig. 21A shows the connection of the positioning device before being coupled to the arm of Fig. 20A.
Fig. 21B shows the cover before being applied to the connection device after it has been coupled to the arm of figure 20A.
Fig. 21C shows the full engagement of the connecting device, cover and arm of figure 20A.
Fig. 22A shows the connection of the positioning device before being coupled to the arm of figure 20A.
Fig. 22B shows the cover before being applied to the connection device after it has been coupled to the arm of figure 20B.
Fig. 22C shows the full engagement of the connecting device, cover and arm of figure 20B.
Fig. 23A shows the connection of the positioning device before being coupled to the arm of figure 20C.
Fig. 23B shows the embedded arm, but not assembled in the connecting device of the arm of figure 20C.
Fig. 23C shows the cover before being applied to the connection device after it has been coupled to the arm of figure 20C.
Fig. 23D shows the full assembly of the connecting device, cover and arm of figure 20C.
Fig. 24 shows internal detail in cutaway view of the full assembly of the connecting device, cover and arm of figure 20C.
Fig. 25A shows the connection of the positioning device before being coupled to the arm of figure 20D.
Fig. 25B shows the cover before being applied to the connection device after it has been coupled to the arm of figure 20D.
Fig. 25C shows the full assembly of the connecting device, cover and arm of figure 20D.
Fig. 26 shows a side cutaway view of the complete assembly of the connecting device, cover and arm of figure 20D.

The figures 27A to 27G show all the processes and movements of the parts to obtain the assembly of the connecting device with the arm of figure 20D and subsequent application of the cover.

In accordance with the annexed drawings and in its details the connection device (1) for multiple arms windshield wiper is formed by an elongated body in "U" shape, with the side (2) equal, being that each one of the upper ends of the connector (1) have openings (4) and (5) in which they operate flexible rods (6) and (7) disposed from opposite ends of said openings (4) and (5), and that rods (6) and (7) are arranged in inclined angle out of the plug (1) and superiorly defining locking ramps (8) and (9), wherein the ramp (9) has inferiorly at its free extreme tooth of locking (10), while the side (2) of the connector (1) defines a region (11) from the side of the rod (6) of smaller width than the opposing region (12) along the rod (7) being defined on the basis each side (11) guides (13), provided averagely lower projection (14) facing downwards, while the side (11) has on each side along the end edge of the pair connector projections (15), being finally provided for the median inside of each wall (11) a cylindrical projection (16) intended to engage in circular passages (17) provided in the holder (18) that is fixed to the body of the blade not shown.

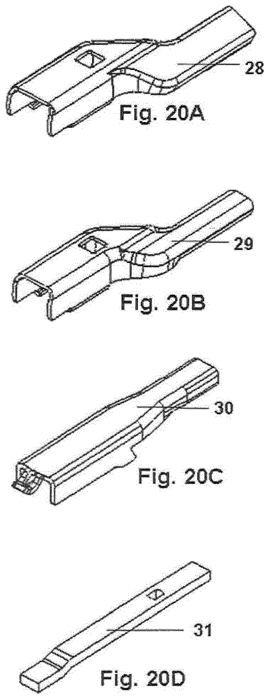

This composition of connector elements (1) basically defines two lateral areas, one with the lower part more thickened (12) than the other (11) in order to receive arms, whose sockets in "U" vary in size according with the model, and the locking of the arm relative to the connector (1) allow the use of elastic ramps (8) and (9) and also the tooth (10) foreseen in the tamp (9), allowing the stable and secure connection the of the blade to a variety of arms shown in figures 20A to 20D.

A cover (19) is used as a complementary element to some locking arms and also has aesthetic function; for some arms the cover has just aesthetics function and consists of a substantially U-shaped piece whose upper wall has a rectangular opening, (20) that defines an inner region along the opening with builtin tabs (21) and possessing along the base of the walls (22), internal projections (23) with inner wall (24) facing up in "U" shape reversed that defines a pair of claws or guides for coupling in some types of arms, as foreseen in the cover (19) a front wall (25) designed to limit the sliding of the arm of figure 20D via the connector (1), if the tooth (10) fails to provide locking while the wall (22) internally and with the built-in tabs (21) has a thickening (26), which can be solid or with groove (27) for relief of material, designed to provide support and lateral alignment fitting in with the connector (1).

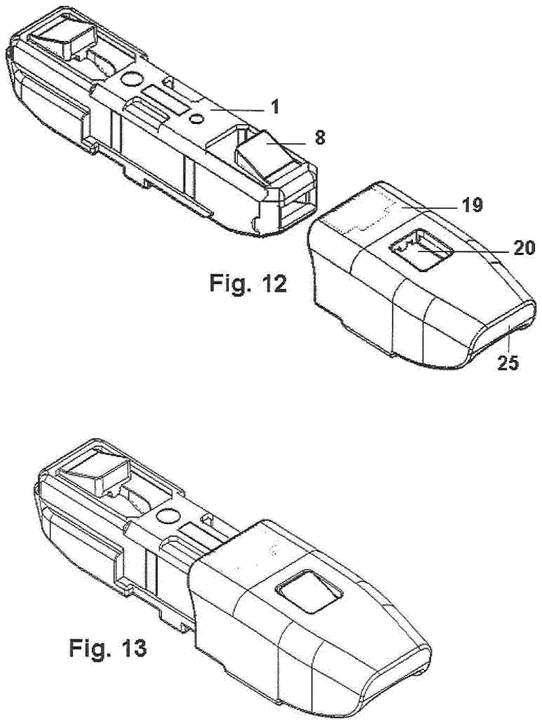

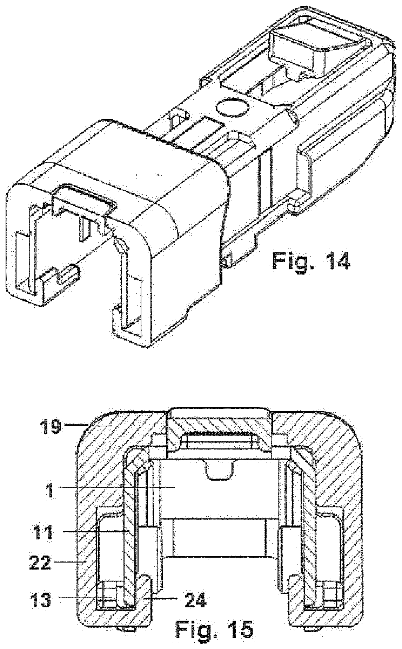

The coupling between the connector (1) and the cover (19) can be practiced on both sides of the connector; the coupling in each of these situations have different fixation, thus the situation in which the cover is attached to the thinner side (11), shown in figures 12 to 15 , the initial portion of the guide (13) remains within the wall (22) of the cover (19) and the opening (20) of this receives the locking ramp (8) that, due to its elasticity, allows the cover to slide over it and, reaching the opening (20), makes the locking as a "click" sound. In this case the contact of the thickening (26) with the side (11) and the contact of the internal projection (23) with the lower lateral sides (11) guide the assembly and maintain a stable set.

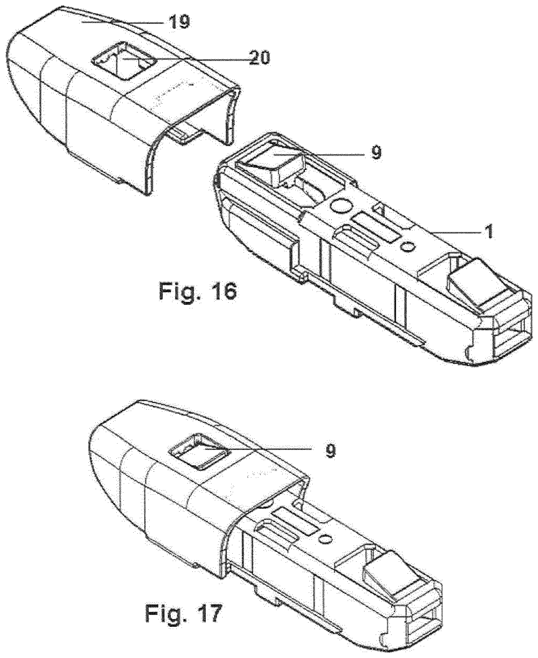

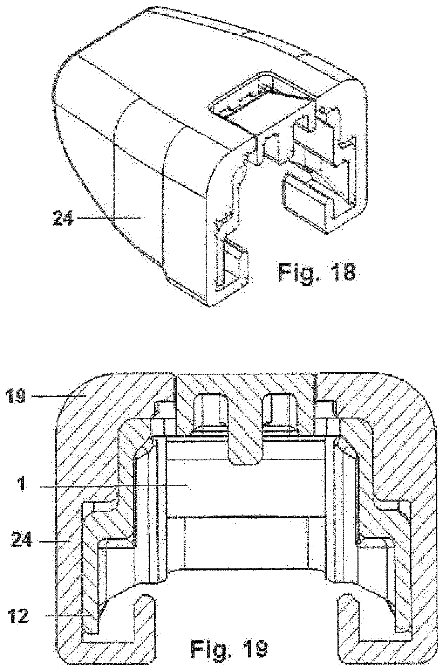

On the coupling by the opposite side, i.e. the thickened wall (12) of the connector, as shown in figures 16 to 19 , the contact between the said side (12) and the internal wall face (22) of the cover (19) and the contact of the lower face of the same side (12) with the internal projection (23) produce the necessary support to keep the set stable; in this situation the opening (10) of the cover (19) receives the second locking ramp (9) of the connector (8).

The connector object of patent application provides for its application in four different arms of the windshield wipers, such as the arms (28), (29), (30) and (31) shown in figures 20A, 20B, 20C and 20D , whose fittings are detailed below.

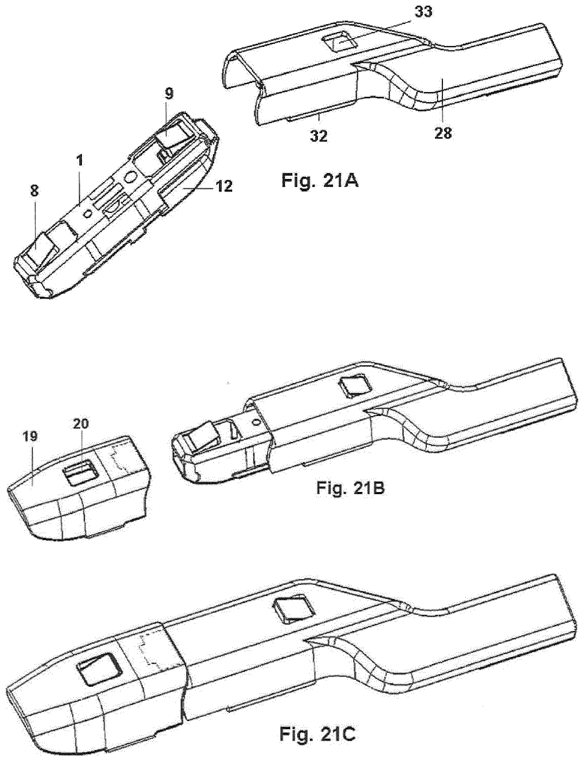

In the application arm (28) of figure 20^{a}, whose connection is illustrated in figures 21A, 21B and 21C, the connector (1) is applied from a thickened side (12) into the arm (28), where their guides (32) slide in the connector (1) which has its superior elastic ramp of locking (9) reaching the rectangular opening (33) of the arm (28) to place the locking assembly.

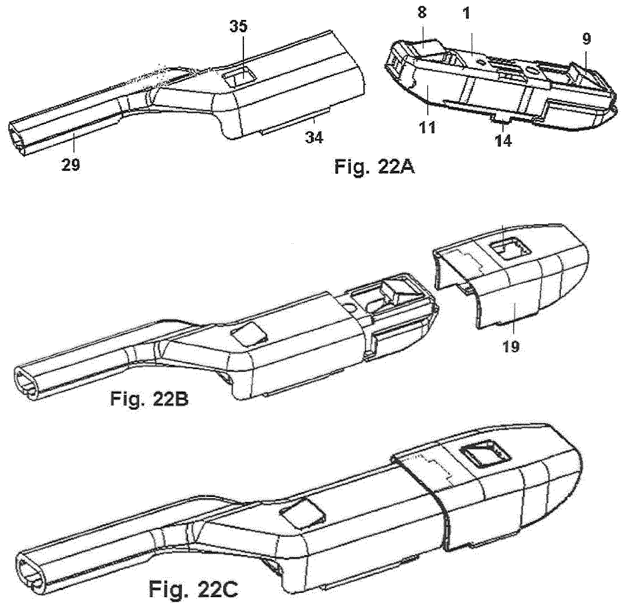

After to fit the connector (1) in the arm (28), the cover (19) is applied with aesthetic effect, sliding on the connector (1) until its opening (20) reaches the elastic locking ramp (8)
In application with the arm (29) of figure 20B, whose connection is shown in figures 22A, 22B and 22C, the connector (1) is applied from the side (11) into the arm (29), where its guides (34) slide in the connector which has a superior elastic locking ramp (8), reaching the rectangular opening (35) of the arm (29) to place the locking of the assembly.

Thereon, the lower thickening (12) of the connector (1) acts as superior thickening guide (26) of the cover (19), so as to maintain alignment and stable assembly due to the tight fit between cover (19) and connector (1).

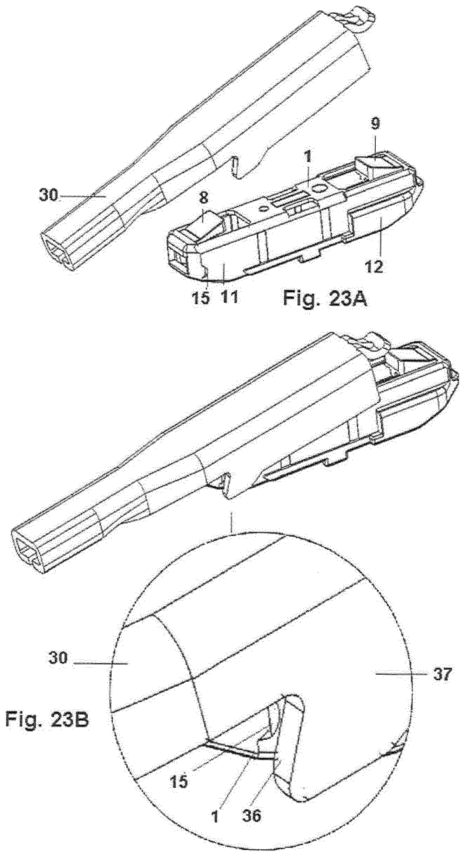

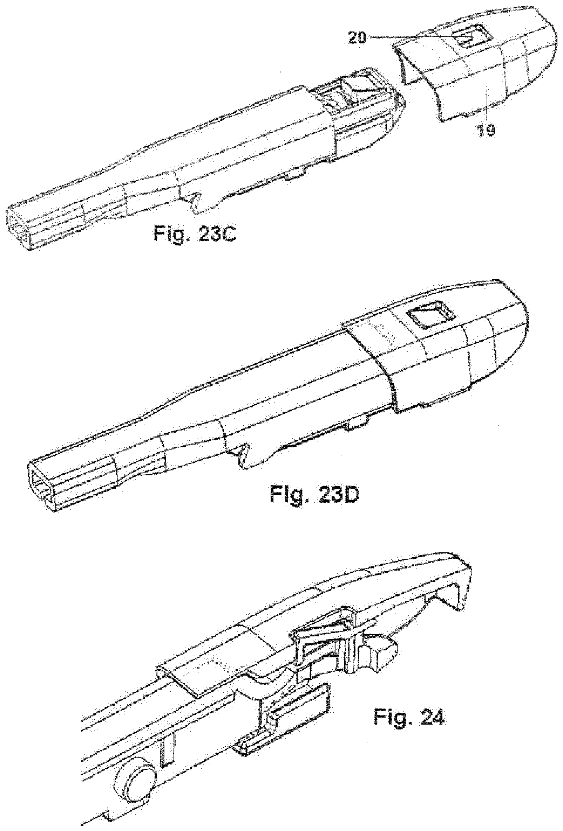

In the application with the arm (30) of figure 20C , whose connection is shown in figures 23A, 23B , 23C and 24D , a "V"-shaped socket (36) provided in the walls (37) of the arm (30) acts on the projection (15) of the connector (1), where it is supported and then rotated so that the "U"-shaped body of the arm (30) fits by its side walls on the thinner sides (11) of the connector (1) so as to face milling thickening of the sides (12) of the connector (1) and stay on the upper surface of the connector (1), being braked by applying the cover (19) that slides over the connector and overlaps on the end of the arm (30) until the locking ramp (9) of the connector (1) reaches the passage (20) of the cover (19), locking it.

In this assembly, the lower thickening (12) of the connector (1) acts as superior thickening guide (26) of the cover (19), so as to maintain the alignment and stability of the assembly, due to the tight fit between cover (19) and connector (1).

This solution, though similar to that in document P10901324-5 of the applicant, has the as difference the fact that the upper side of the wall (22) of the cover (19), where the guides are located (21), which provides the locking of the arm (30) in the vertical direction by contact with the upper face of the arm, unlike the provisions of the document cited above.

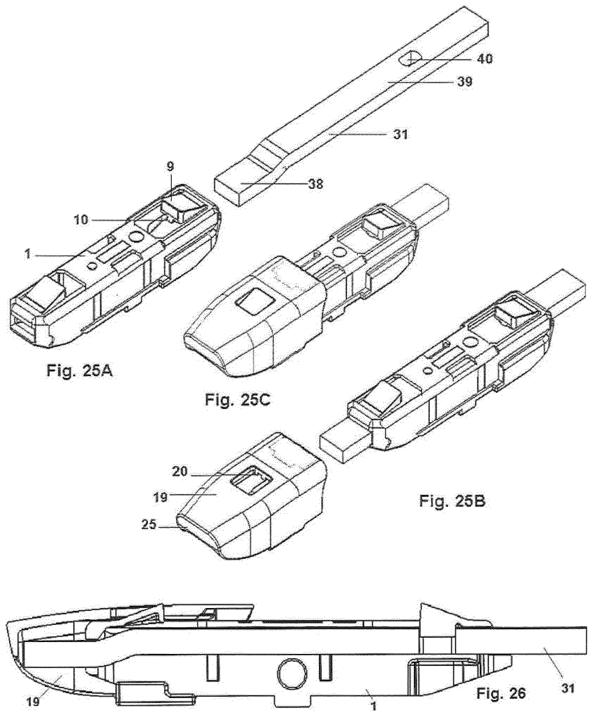

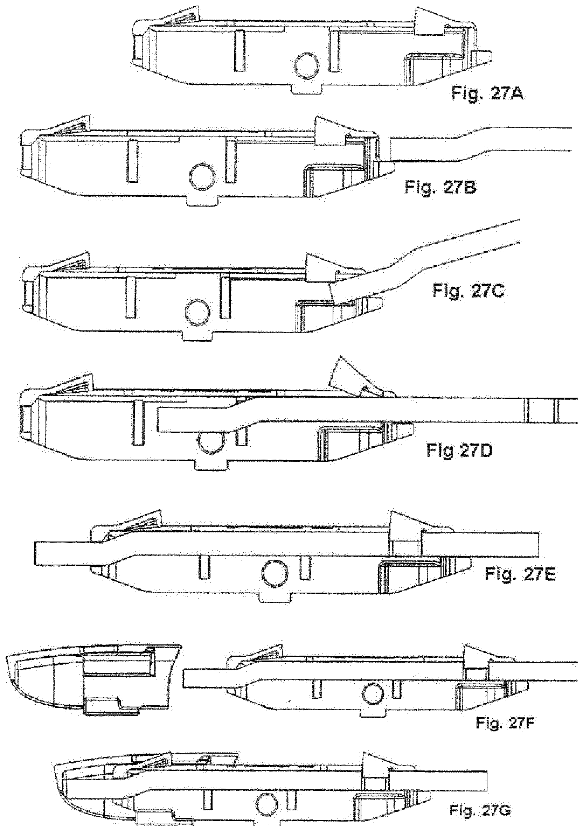

In the application with the arm (31) of figure 20D , which connection is shown in figures 25A to 27G , the said arm (31) is applied to the opening of the connector (1) from the side of the thickened side (12), where the initial segment (38) of the arm (31), which is on a level lower than the remainder (39) of said arm (31), slides under the ramp (9) to accommodate in the entire connector (1) length, such so that the tooth (10) on the ramp (9) reaches and locks the hole (40) provided in portions (39) of the arm (31), keeping the assembly locked.

The cover (19) is applied so that the ramp (8) of the connector (1) locks in its passage (20), while the front wall (25) of the cover prevents the slide of the arm (31) forward of the said cover (19), if the tooth (10) fails.

With this construction, the connector (1) associated with the cover (19) allows coupling with four types of windshield wiper arms, reducing manufacturing costs and storage of spare blades.

## Claims

1. Connecting arrangement in a Windshield wiper blade for multiple types of arms comprising a connection device (1) the connection device (1) being formed by an elongated body in "U" shape, with equal side walls (2) and an upper side, wherein each side wall (2) has a guide (13) at its base, wherein at each end of the upper side of the connector (1) an opening (4, 5) in which a flexible rod (6, 7) connected with the upper side of the connector (1) is provided , wherein the rods (6 ,7) are arranged in tilted angle out of the connector (1) and define a first locking ramp (8) and a second locking ramp (9) protruding outwards **characterized in that** the first locking ramp (8) and the second locking ramp (9) are inclined in opposite directions and **in that** the side walls (2) of the connector (1) have a first region (11) at the side of the rod (6) having the first locking ramp (8) which is of smaller width than the second, opposite region (12) next to the rod (7) having the second locking ramp (9), wherein the second locking ramp (9) has at its free end a tooth (10) and at the base of each side wall (2) a bulge (14) is provided the bulge being oriented downwards.

2. Connecting arrangement according to claim 1, **characterized in that** the tooth (10) is arranged at the lower part of the second locking ramp (9).

3. Connecting arrangement according to one of the proceeding claims, **characterized in that** a pair of knobs (15) is provided at one end of each side wall (2).

4. Connecting arrangement according to one of the proceeding claims, **characterized in that** at the inner side of each wall (11) in the median of the wall (11) a cylindrical projection (16) intended to engage in circular passages (17) provided in a support (18) fixed to a body of a wiper blade is provided.

5. Connecting arrangement according to the previous claims **characterized in that** there is provided a cover (19) attachable to the connecting device (1).

6. Connecting arrangement according to claim 5, **characterized in that** the cover (19) has an upper wall with a rectangular opening (20).

7. Connecting arrangement according to claim 6, **characterized in that** internal guides (21) near to the said opening (20) are provided.

8. Connecting arrangement according to one of the claims claim 5 to 7, **characterized in that** the cover (19) has walls (22) wherein at the base of the walls (22) internal projections (23) provided with internal wall (24) pointing upwards in an inverted "U"-shape defining a pair of claws or tabs are provided.

9. Connecting arrangement according to one of the claims claim 5 to 8, **characterized in that** a front wall (25) is provided.

10. Connecting arrangement according to one of the claims claim 5 to 9, **characterized in that**, the wall (22), internally and along the internal guides (21) has a thickening (26) which may be solid or provided with groove (27).

## Patentansprüche

1. Verbindungsanordnung in einem Scheibenwischerblatt für mehrere Armtypen mit einer Verbindungsvorrichtung (1), wobei die Verbindungsvorrichtung (1) durch einen länglichen Körper in "U"-Form mit gleichen Seitenwänden (2) und einer Oberseite gebildet ist, wobei jede Seitenwand (2) an ihrem unteren Bereich eine Führung (13) aufweist, wobei an jedem Ende der Oberseite des Verbinders (1) eine Öffnung (4, 5) vorgesehen ist, in der eine flexible Lasche (6, 7) angeordnet ist, die mit der Oberseite des Verbinders (1) verbunden ist, wobei die Laschen (6, 7) in einem geneigten Winkel zum Verbinder aus dem Verbinder (1) heraustretend angeordnet sind und eine erste Verriegelungsrampe (8) und eine zweite Verriegelungsrampe (9) definieren, die nach außen vorstehen, **dadurch gekennzeichnet, dass** die erste Verriegelungsrampe (8) und die zweite Verriegelungsrampe (9) gegenläufig geneigt sind und dass die Seitenwände (2) des Verbinders (1) einen ersten Bereich (11), seitlich der Lasche (6) mit der ersten Verriegelungsrampe (8), aufweisen, der eine geringere Breite aufweist als ein zweiter, entgegengesetzt angeordneter Bereich (12), der neben der Lasche (7) mit der zweiten Verriegelungsrampe (9) angeordnet ist, wobei die zweite Verriegelungsrampe (9) an ihrem freien Ende einen Zahn (10) aufweist und wobei an der Unterseite jeder Seitenwand (2) eine Ausbuchtung (14) vorgesehen ist, die nach unten gerichtet ist.

2. Verbindungsanordnung nach Anspruch 1, **dadurch gekennzeichnet, dass** der Zahn (10) am unteren Abschnitt der zweiten Verriegelungsrampe (9) angeordnet ist.

3. Verbindungsanordnung nach einem der vorhergehenden Ansprüche, **dadurch gekennzeichnet, dass** an einem Ende jeder Seitenwand (2) ein Paar Noppen (15) vorgesehen sind.

4. Verbindungsanordnung nach einem der vorhergehenden Ansprüche, **dadurch gekennzeichnet, dass** an der Innenseite jeder Wand (11) mittig ein zylindrischer Vorsprung (16) vorgesehen ist, der dazu bestimmt ist, in kreisförmige Durchgänge (17) einzugreifen, die in einem Träger (18) vorgesehen sind, der an einem Körper eines Wischerblattes befestigt ist.

5. Verbindungsanordnung nach einem der vorhergehenden Ansprüche, **dadurch gekennzeichnet, dass** eine Abdeckung (19) vorgesehen ist, die an der Verbindungsvorrichtung (1) befestigbar ist.

6. Verbindungsanordnung nach Anspruch 5, **dadurch gekennzeichnet, dass** die Abdeckung (19) eine obere Wand mit einer rechteckigen Öffnung (20) aufweist.

7. Verbindungsanordnung nach Anspruch 6, **dadurch gekennzeichnet, dass** Innenführungen (21) in der Nähe der Öffnung (20) vorgesehen sind.

8. Verbindungsanordnung nach einem der vorhergehenden Ansprüche 5 bis 7, **dadurch gekennzeichnet, dass** die Abdeckung (19) Wände (22) aufweist, wobei an dem unteren Bereich der Wände (22) Innenvorsprünge (23) vorgesehen sind, die mit einer in einer invertierten U-Form nach oben weisenden Innenwand (24) versehen ist, die ein Paar Krallen oder Vorsprünge definiert.

9. Verbindungsanordnung nach einem der vorhergehenden Ansprüche 5 bis 8, **dadurch gekennzeichnet, dass** eine Vorderwand (25) vorgesehen ist.

10. Verbindungsanordnung nach einem der vorhergehenden Ansprüche 5 bis 9, **dadurch gekennzeichnet, dass** die Wand (22) innen und entlang der Innenführungen (21) eine Verdickung (26) aufweist, die aus Vollmaterial besteht oder mit einer Nut (27) versehen sein kann.

## Revendications

1. Agencement de connexion dans un balai d'essuie-glace pour de multiples types de bras comprenant un dispositif de connexion (1), le dispositif de connexion (1) étant formé par un corps allongé en forme de « U », avec des parois latérales égales (2) et un côté supérieur, où chaque paroi latérale (2) présente un guide (13) au niveau de sa base, où à chaque extrémité du côté supérieur du connecteur (1), une ouverture (4, 5) dans laquelle une tige flexible (6, 7) connectée au côté supérieur du connecteur (1) est prévue, où les tiges (6, 7) sont agencées selon un angle incliné hors du connecteur (1) et définissent une première rampe de verrouillage (8) et une deuxième rampe de verrouillage (9) dépassant vers l'extérieur, **caractérisé en ce que** la première rampe de verrouillage (8) et la deuxième rampe de verrouillage (9) sont inclinées dans des sens opposés et **en ce que** les parois latérales (2) du connecteur (1) présentent une première région (11) du côté de la tige (6) présentant la première rampe de verrouillage (8) laquelle est moins large que la deuxième région opposée (12) près de la tige (7) présentant la deuxième rampe de verrouillage (9), où la deuxième rampe de verrouillage (9) présente au niveau de son extrémité libre une dent (10) et au niveau de la base de chaque paroi latérale (2) un renflement (14) est prévu, le renflement étant orienté vers le bas.

2. Agencement de connexion selon la revendication 1, **caractérisé en ce que** la dent (10) est agencée au niveau de la partie inférieure de la deuxième rampe de verrouillage (9).

3. Agencement de connexion selon l'une des revendications précédentes, **caractérisé en ce qu'**une paire de boutons (15) est prévue au niveau d'une seule extrémité de chaque paroi latérale (2).

4. Agencement de connexion selon l'une des revendications précédentes, **caractérisé en ce que**, au niveau du côté intérieur de chaque paroi (11) sur la médiane de la paroi (11), une protubérance cylindrique (16) destinée à s'engager dans des passages circulaires (17) prévus dans un support (18) fixé à un corps d'un balai d'essuie-glace est prévue.

5. Agencement de connexion selon les revendications précédentes, **caractérisé en ce qu'**il est prévu un couvercle (19) pouvant être attaché sur le dispositif de connexion (1).

6. Agencement de connexion selon la revendication 5, **caractérisé en ce que** le couvercle (19) présente une paroi supérieure avec une ouverture rectangulaire (20).

7. Agencement de connexion selon la revendication 6, **caractérisé en ce que** des guides internes (21) près de ladite ouverture (20) sont prévus.

8. Agencement de connexion selon l'une des revendications 5 à 7, **caractérisé en ce que** le couvercle (19) présente des parois (22) où au niveau de la base des parois (22), des protubérances internes (23) dotées d'une paroi interne (24) pointant vers le haut selon une forme de « U » inversé définissant une paire de mâchoires ou de pattes sont prévues.

9. Agencement de connexion selon l'une des revendications 5 à 8, **caractérisé en ce qu'**une paroi avant (25) est prévue.

10. Agencement de connexion selon l'une des revendications 5 à 9, **caractérisé en ce que** la paroi (22), de manière interne et le long des guides internes (21), présente un épaississement (26) lequel peut être plein ou doté d'une rainure (27).
